# EUROPÄISCHE PATENTSCHRIFT

(11) **EP 1 057 323 B1**
(45) Veröffentlichungstag und Bekanntmachung des Hinweises auf die Patenterteilung: **05.06.2002**
(21) Anmeldenummer: 99908925.3
(22) Anmeldetag: 18.02.1999
(51) Int. Cl.: H04N 5/222, H04N 5/272

(54) **KAMERA TRACKING SYSTEM FÜR EIN VIRTUELLES FERNSEH- ODER VIDEOSTUDIO**
CAMERA TRACKING SYSTEM FOR A VIRTUAL TELEVISION OR VIDEO STUDIO
SYSTEME DE POURSUITE DE CAMERA POUR STUDIO DE TELEVISION OU DE VIDEO VIRTUEL

(30) Priorität: 18.02.1998 DE 19806646; 05.09.1998 DE 19840656
(43) Veröffentlichungstag der Anmeldung: 06.12.2000
(73) Patentinhaber: GMD - FORSCHUNGSZENTRUM INFORMATIONSTECHNIK GMBH, D-53754 Sankt Augustin (DE)
(72) Erfinder: FEHLIS, Hendrick, D-53773 Hennef (DE); MAYER, Thomas, D-53757 Sankt Augustin (DE); MIKA, Thorsten, D-51373 Leverkusen (DE); SCHNEPF, Uwe, D-53757 Sankt Augustin (DE)
(74) Vertreter: Hilleringmann, Jochen, Dipl.-Ing.
(86) Internationale Anmeldenummer: EP9901062
(87) Internationale Veröffentlichungsnummer: WO9943150

(56) Entgegenhaltungen:
- WO-A-96/32697
- WO-A-97/14253
- WO-A-98/34410
- WO-A-99/14939
- DE-U- 9 418 382

## Beschreibung

Die vorliegende Erfindung betrifft ein neuartiges Kamera Tracking System für ein virtuelles Fernseh- oder Videostudio.

Zur Produktion von virtuellen Film- oder Videosequenzen werden in einer speziellen Vorrichtung die von einer Kamera aufgenommenen Bilder, beispielsweise einer Person, mit einem in Wirklichkeit nicht vorhandenen (deshalb auch virtuellen) Hintergrund (electronic set) oder anderen, in der Vorrichtung erzeugten Details kombiniert (sogenanntes virtuelles Studio). Damit die von der Kamera aufgenommene Person präzise und lagetreu in den virtuell erstellten Hintergrund integriert werden kann, muß die jeweils momentan herrschende Position und Orientierung der Aufnahmekamera (Studiokamera) bekannt sein,

Bisher wurde die Position der Aufnahmekamera ausgehend von einer Null-Stellung durch Messen des zurückgelegten Weges und die Orientierung der Kamera durch Messen der Schwenk-, Nick- und Rollwinkel über entsprechende Inkrementalgeber errechnet (Sommerhäuser, F.: Das virtuelle Studio; in: FERNSEH- UND KINO-TECHNIK, 50. Jhrg., 1996, Nr. 1-2, Seiten 11-15, 18-22). Hierzu ist es notwendig, an der Kamera und an ihrem Stativ (Dreibein) an jedem Gelenk und an jeder Achse entsprechende Inkrementalgeber zu installieren. Dieses bekannte System erfordert einen relativ hohen Aufwand an Meßtechnik.

Aus der Interner Broadcast Convention IBC '97, Convention Publication Seiten 284 - 289 und WO-A-94/05118 ist jeweils ein Kamera Tracking System bekannt, bei dem an der Kamera eine zur Studiodecke zeigende Hilfskamera angebracht ist, die Streifenkodierungen aufweisende Markierungen an der Studiodecke erfaßt. Über die von der Kamera erfaßten Streifenkodierungen kann ein entsprechender Rechner dann die exakte Position der Kamera im Studio bestimmen.

Auf der Internationalen Broadcast Convention IBC '97, die vom 12. bis 16. September 1997 in Amsterdam stattgefunden hat, wurde ein Kamera Tracking System für ein virtuelles Fernseh- oder Videostudio der Öffentlichkeit vorgestellt, bei dem fünf Lichtquellen an dem Stativ einer Kamera angebracht waren. Diese fünf Lichtquellen wurden von vier Erfassungskameras erfasst, von denen jede Erfassungskamera mehrere Lichtquellen erfasste. Mittels einer Recheneinheit wurden die Bilder der Erfassungskameras ausgewertet, um die Position der Kamera zu ermitteln.

Über diese bekannte Kamera Tracking Systeme kann zwar der Standort der Kamera im Studio bestimmt werden, jedoch müssen nach wie vor Inkrementalgeber eingesetzt werden, um die Höhe der Kamera über dem Boden, den Schwenk-, den Roll- und den Nickwinkel der Kamera zu bestimmen.

Aus EP-A-0 689 356 ist ein sprachgesteuertes Video-System bekannt, bei dem eine Video-Kamera durch die Stimme einer Person ausgerichtet wird. Dabei sendet die Person über entsprechende Emitter Signale an das Video-System aus, so daß die Video-Kamera den Bewegungen der Person folgen kann, um die Person permanent zu erfassen.

Aus WO-A-99/14939 ist ein Kamera Tracking System bekannt, bei dem Infrarotstrahlung zur Positionsdetektion verwendet wird.

Der vorliegenden Erfindung liegt die Aufgabe zugrunde in Kamera Tracking System zu schaffen, das die Position und die Orientierung einer frei im Raum bewegbaren Kamera präzise, schnell und zuverlässig bestimmt.

Zur Lösung dieser Aufgabe wird erfindungsgemäß ein Kamera Tracking System gemäß Anspruch 1 vorgeschlagen.

Bei dem erfindungsgemäßen Kamera Tracking System senden mindestens drei Emittervorrichtungen, die entweder direkt mit der Aufnahmekamera oder indirekt, beispielsweise über das Stativ der Aufnahmekamera mit dieser koppelbar sind, elektromagnetische Strahlung aus. Dabei können die Emittervorrichtungen als aktiv arbeitende oder passiv arbeitende Vorrichtungen ausgebildet sein. Während eine aktiv arbeitende Vorrichtung elektromagnetische Strahlung erzeugt und abstrahlt, arbeitet eine passive Emittervorrichtung nach dem Reflektionsprinzip, indem elektromagnetische Strahlung reflektiert wird. Die von den Emittervorrichtungen kommende elektromagnetische Strahlung wird von mindestens zwei Detektorvorrichtungen erfaßt. Jede Detektorvorrichtung ist dabei in der Lage, mehrere Emittervorrichtungen gleichzeitig selektiv zu erfassen, wobei dann mittels jeder Detektorvorrichtung die relative Lage der erfaßten Emittervorrichtungen bestimmbar ist. Ob eine Detektorvorrichtung ein oder mehrere Emittervorrichtungen erfaßt, hängt von der Ausrichtung der Aufnahmekamera ab, mit der die Emittervorrichtungen mechanisch direkt oder indirekt gekoppelt sind. Jede Detektorvorrichtung ist wiederum an eine Recheneinheit angeschlossen, die die von den Detektorvorrichtungen erfaßten, von den Emittervorrichtungen kommenden elektromagnetischen Strahlungen auswertet, indem sie anhand der Lagebestimmung der mit jeder der Detektorvorrichtungen erfaßten Emittervorrichtungen insgesamt die Position und/oder Ausrichtung der mindestens drei Emittervorrichtungen relativ zueinander ermittelt.

Ein nach dieser erfindungsgemäßen Lehre ausgebildetes Kamera Tracking System hat den Vorteil, daß bei einer Bewegung der Studio-/Aufnahmekamera die Emittervorrichtung unmittelbar mitbewegt wird und daß die Position der Emittervorrichtung im Raum von im Studio verteilten Erfassungskameras drahtlos erfaßt wird. Die aufgenommenen Daten werden dann unmittelbar von dem Rechner ausgewertet, so daß dem Rechner die momentane Position und Ausrichtung der Aufnahmekamera im Studio bekannt ist und diese für die virtuellen Fernseh- oder Videosequenzen genutzt werden kann.

Die Anbringung der Emittervorrichtungen direkt an der Aufnahmekamera bzw. an dessen Gehäuse hat weiterhin den Vorteil, daß das erfindungsgemäße Kamera Tracking System neben der Bestimmung der Position der Kamera auf dem Fußboden (z.B. im Studio) auch die momentane Höhe der Kamera über dem Boden, der momentane Nick-, der momentane Roll- und der momentane Schwenkwinkel bestimmt werden können. Hierdurch ist es beispielsweise möglich, daß der Kameramann seine Studiokamera auf der Schulter transportiert, um eine optimale Bewegungsfreiheit zur Aufnahme der Objekte zu erhalten. In diesem Fall kann das erfindungsgemäße Kamera Tracking System sowohl die Position im Studio als auch die Lage (Höhe, Roll-, Nick- und Schwenkwinkel) der Kamera präzise, schnell und zuverlässig bestimmen.

Gemäß der Erfindung ist an der Kamera ein Gyroskop angebracht, weiches den Schwenk-, Nick- und Rollwinkel der Kamera bestimmt. Dieses Gyroskop wird zusätzlich zu den Erfassungskameras eingesetzt, so daß hierdurch eine redundante Orientierungsbestimmung der Kamera erfolgt. Diese redundant vorliegenden Meßwerte werden dann von der Software zur Berechnung der Orientierung der Kamera herangezogen.

Zoom und Fokus der Studiokamera werden zweckmäßigerweise mit Inkremental-Weggebern bestimmt, die in die Optik integriert sind und die Stellung der betreffenden optisehen Elemente erfassen. Diese Weggeber oder allgemein Detektoren sind ebenfalls mit der Recheneinheit verbunden, um zusammen mit der ermittelten Position und Ausrichtung der Studiokamera den Studio-Hintergrund zu generieren.

Bei dem erfindungsgemäßen Kamera Tracking System ist es zwar möglich, mit drei Emittervorrichtungen und zwei Detektorvorrichtungen eine Positionsbestimmung durchzuführen, jedoch ist es vorteilhaft, fünf Emittervorrichtungen und vier Detektorvorrichtungen einzusetzen. Durch die Verwendung von mehr als drei Emittervorrichtungen kann neben der Position der Kamera auch die Höhe oder der Rollwinkel oder der Nickwinkel oder der Schwenkwinkel bestimmt werden, da die Zuordnung der einzelnen Emittervorrichtungen zueinander Rückschlüsse hierauf zuläßt. Durch den Einsatz von mehr als zwei Detektorvorrichtungen kann das erfindungsgemäße Kamera Tracking System die Position der einzelnen Emittervorrichtungen im Raum zuverlässiger bestimmen, da nunmehr redundante Daten vorliegen.

Das heißt, der angeschlossene Rechner ermittelt ausgehend von jeder Detektorvorrichtung eine Gerade durch die jeweilige Emittervorrichtung. Der Schnittpunkt dieser Geraden liegt genau in der Emittervorrichtung. Da sich die Geraden aufgrund von Meß- und/oder Rechenfehlern nicht exakt in einem Punkt treffen, wird über mathematische Methoden zur Fehlerminimierung ein theoretischer Schnittpunkt errechnet. Dieser theoretische Schnittpunkt entspricht um so präziser dem Ort der tatsächlichen Emittervorrichtung, je mehr Geraden zur Verfügung stehen.

Ein weiterer Vorteil dieses redundanten Systems besteht darin, daß dem Rechner auch dann genügend Informationen zur Bestimmung der Position und der Lage der Studiokamera zur Verfügung stehen, wenn die Emittervorrichtung für die eine oder die andere Detektorvorrichtung nicht erfaßbar sind oder wenn die Emittervorrichtungen sich ungünstigerweise gegenseitig abdecken. Anhand von Versuchen ist festgestellt worden, daß ein fünf Emittervorrichtungen und vier Detektorvorrichtungen aufweisendes Kamera Tracking System bereits eine sehr zuverlässige und sehr präzise Positions- und Lagebestimmung der Studiokamera gewährleistet. In einer vorteilhaften Ausführungsform des erfindungsgemäßen Kamera Tracking Systems werden zehn oder gar zwölf Detektorvorrichtungen verwendet, so daß dieses Kamera Tracking System eine noch präzisere und noch zuverlässigere Bestimmung der Position und der Lage der Studiokamera erlaubt.

Bei den erfindungsgemäß zu verwendenden Emittervorrichtungen handelt es sich insbesondere um Lichtquellen, die zweckmäßigerweise Infrarotlicht abgeben. Die Detektorvorrichtungen sind vorzugsweise als Erfassungskameras ausgebildet. Sämtliche zuvor genannten Varianten der Erfindung sind gleichermaßen auch auf den Fall anzuwenden, daß die Emittervorrichtungen als Lichtquellen und die Detektorvorrichtungen als Erfassungskameras ausgebildet sind. Dies gilt auch für die nachfolgenden Betrachtungen, bei denen der Einfachheit halber statt von Emittervorrichtungen von "Lichtquellen" und statt von Detektorvorrichtungen von "Erfassungskameras" die Rede ist.

Die Anordnung der Erfassungskameras mindestens einen Meter oberhalb der Lichtquellen hat den Vorteil, daß hierdurch ein günstiger Blickwinkel geschaffen ist. In diesem Fall erzeugt die Bewegung der Lichtquellen (d.h. der Studiokamera) eine in dem von den Erfassungskameras jeweils gelieferten Bildern gut sichtbare Verschiebung der Lichtquelle, so daß hierdurch die Auswertung durch den Rechner erleichtert und präzisiert werden kann.

Die möglichst gleichmäßige Verteilung der Erfassungskameras im Studio hat den Vorteil, daß die Lichtquellen aus mehreren stark voneinander abweichenden Blickwinkeln erfaßt werden, so daß hierdurch eine zuverlässige geometrische Auswertung erreicht wird.

In einer bevorzugten Ausführungsform des erfindungsgemäßen Kamera Tracking Systems sind die Lichtquellen alle in einer Ebene an einem Halteelement angeordnet, das insbesondere als Ring ausgebildet ist. Dies hat den Vorteil, daß die Lichtquellen zwar platzsparend angeordnet sind, dennoch einen größtmöglichen Abstand voneinander aufweisen, so daß eine gute Erfassung durch die Erfassungskameras möglich ist.

In einer bevorzugten Weiterbildung ist zwischen der Lichtquelle und dem Ring ein Distanzelement vorgesehen, damit die von den Lichtquellen erzeugten Reflektionen auf dem Ring möglichst gering bleiben, so daß die Lichtquelle für die Erfassungskamera wie gewünscht punktförmig erscheint.

Zweckmäßig ist es überdies, wenn die Umgebung um die Lichtquellen herum nicht reflektierend, vorzugsweise schwarz ist, um die Lichtquellen kontraststark erkennen zu können.

Die Anordnung der Lichtquellen auf einem in äquidistante Abschnitte unterteilten Ring, wobei ein Abschnitt oder Fixpunkt mehr als die Gesamtzahl der Lichtquellen vorhanden sind, hat den Vorteil, daß auf dem Ring eine markante, unsymmetrische Lücke entsteht, die zur eindeutigen Zuordnung der Lichtquellen eingesetzt wird. Hierdurch wird erreicht, daß die Lichtquellen zwar möglichst alle den gleichen Abstand voneinander haben, um auf den von den Erfassungskameras erfaßten Bildern gut voneinander differenziert werden zu können, daß jedoch gleichzeitig dem Ring aus Lichtquellen eine eindeutige Richtung zugeordnet werden kann. Die eindeutige Richtung kann aber auch dadurch erreicht werden, daß die Lichtquellen in einem vorbestimmten unregelmäßigen Muster angeordnet sind.

Der Einsatz von Infrarotlicht im erfindungsgemäßen Kamera Tracking System hat den Vorteil, daß die Erfassungskameras nicht versehentlich andere im Studio befindliche Lichtquellen erfassen und daß im Studio auftretendes Streulicht unbeachtlich bleiben kann.

In einer anderen, bevorzugten Ausführungsform ist die an der Lichtquelle anliegende Betriebsspannung kleiner als die Sollspannung der Lichtquelle. Insbesondere wird bei Einsatz einer 1 2 Volt Halogen-Glühbirne eine Betriebsspannung von 4,5 Volt angelegt. Dies hat den Vorteil, daß die Lichtquelle überwiegend im Infrarotbereich Licht ausstrahlt und somit die allgemeine Ausleuchtung des Studios nicht beeinflußt. Ein weiterer Vorteil liegt darin, daß derartige mit einer niedrigeren Betriebsspannung versehene Lichtquellen eine höhere Lebensdauer und eine geringere Störanfälligkeit aufweisen.

In einer weiteren bevorzugten Ausführungsform ist die Erfassungskamera eine handelsübliche CCD-TV Kamera für schwarz-weiß Aufnahmen. Solche TV Kameras sind kostengünstig erhältlich und enthalten gewöhnlicherweise einen Infrarotlicht ausfiltemden Filter, da dieses Infrarotlicht für normale Anwendungen unerwünscht ist. Beim erfindungsgemäßen Kamera Tracking System wird jedoch überwiegend mit Infrarotlicht gearbeitet, so daß dieser in der CCD-TV Kamera eingebaute Infrarotfilter entfernt werden, damit die CCD-TV Kamera auch Infrarotlicht gut wahrnimmt.

In einer weiteren, vorteilhaften Ausgestaltung ist die Erfassungskamera mit einem sichtbares Licht ausfilternden und nur infrarotes Licht durchlassenden Filter versehen, damit andere im Studio befindliche Lichtquellen oder unerwünscht auftretende Reflektionen im sichtbaren Lichtbereich nicht von der Erfassungskamera wahrgenommen werden und zu einer fehlerhaften Erfassung der an der Kamera befindlichen Infrarot-Lichtquellen führen.

In der einer anderen, bevorzugten Ausführungsform weist die Erfassungskamera eine automatische Blendenregelung auf. Hierdurch kann der zur Erfassung der Lichtquellen erforderliche Lichteinfall selbständig von der Erfassungskamera gesteuert werden.

In noch einer weiteren, bevorzugten Ausführungsform des erfindungsgemäßen Kamera Tracking Systems arbeitet die Erfassungskamera mit einer Bildfrequenz von 50 Hertz (in Europa) bzw. 60 Hertz (in Übersee), damit die Erfassungskamera in idealer Weise mit der Studiokamera synchronisiert werden kann. Dies ist deshalb besonders vorteilhaft, weil hierdurch die Daten zur Positions- und/oder Lagebestimmung der Kamera quasi zeitgleich mit dem von der Studiokamera aufgenommenen Bild vorliegen, so daß eine optimale Anpassung des Studiobildes an das Computerbild/virtuelle Bild erfolgen kann.

In einer vorteilhaften Weiterbildung werden in die Lichtquellen nicht mit Wechselspannung, sondern mit Gleichspannung betrieben. Hierdurch wird erreicht, daß die Lichtquellen permanent Licht imitieren, so daß eine Synchronisation zwischen der Lichtquelle und der Erfassungskamera obsolet ist. Dies führt zu erheblichen Kosteneinsparungen.

In noch einer anderen, bevorzugten Weiterbildung ist die Lichtquelle von einer nicht durchsichtigen aber zumindestens teilweise lichtdurchlässigen Kugel umgeben, deren Durchmesser zwischen 1 cm und 10 cm, vorzugsweise 5 cm beträgt. Hierdurch wird das von der Lichtquelle imitierte Licht gleichmäßig auf die Kugeloberfläche projiziert, so daß die erleuchtete Kugeloberfläche in einfacher Weise von dem CCD-Chip der Erfassungskamera erfaßt werden kann. Dieser gleichmäßige und gleichzeitig vergleichsweise große Lichtfleck unterscheidet sich deutlich von seinem zumindest im Infrarotbereich dunklen Hintergrund und verhindert so ein Verwackeln der von der Erfassungskamera aufgenommenen Bilder und bewirkt eine präzise Positionsbestimmung der jeweiligen Lichtquelle. Diese Kugel ist vorteilhafterweise aus Teflon gefräst, was sich als besonders günstig erwiesen hat.

Die derart von der Erfassungskamera aufgenommenen Bilder werden anschließend von einer Datenverarbeitungsanlage (Rechner) weiterverarbeitet. Dies erfolgt zweckmäßigerweise dergestalt, daß die Bilder zunächst binarisiert werden, bevor mittels einer an sich bekannten Schwerpunktsberechnung der Schwerpunkt einer jeden Lichtquelle für jedes Bild separat berechnet wird. Hierdurch wird erreicht, daß für jedes Bild einer jeden Erfassungskamera ein sehr präziser Lagepunkt der jeweiligen Lichtquelle definiert werden kann. Da dem Rechner die Position und die Orientierung (Lage) einer jeden, fest installierten Erfassungskamera bekannt ist, kann der Rechner für jede Erfassungskamera eine Gerade im Raum bestimmen, die durch den auf dem CCD-Chip befindlichen Bildpunkt der jeweiligen Lichtquelle und einen fest definierten Punkt in der Erfassungskamera bis hin zur Lichtquelle führt. Durch Überlagern mehrerer dieser Geraden (je nach Anzahl der aktiven Erfassungskameras) kann dann die Lage der Lichtquelle im Raum bestimmt werden, da sich die Lichtquelle im Schnittpunkt dieser Geraden befinden muß. Im nächsten Schnitt berechnet der Rechner dann aus den ihm nun bekannten Positionen der verschiedenen Lichtquellen die Position und die Lage der Kamera.

Wie oben kurz erwähnt, ist es von Vorteil, wenn die Emittervorrichtungen als Lichtquellen in Form von Leuchtkörpern ausgebildet sind, die eine sphärische Lichtfläche aufweisen. Im einfachsten Fall können als Lichtquellen Glühlampen eingesetzt werden. Diese Glühlampen stehen nach oben von dem Halteelement ab und sind damit durch die Erfassungskameras zuverlässig erfaßbar. Versuche haben jedoch ergeben, daß der optische Abstand der Mittelpunkte zweier benachbarter Lichtquellen bei einem ungünstigen Winkel der Studiokamera zu einer oder mehreren Erfassungskameras sehr gering wird, so daß eine teilweise oder vollständige optische Überdeckung zweier Lichtquellen eintreten kann. In diesem Fall könnte eine Erfassungkamera zwei unterschiedliche Lichtquellen als eine einzige Lichtquelle wahrnehmen, was zu falschen Ergebnissen führen kann. Eine optische Überschneidung zweier Lichtquellen kann bestmöglichst dadurch vermieden werden, daß die Lichtquellen oder, allgemeiner ausgedrückt, die Emittervorrichtungen ebene Emissionsflächen aufweisen. Im Falle des Einsatzes von Lichtquellen zur Emission sichtbaren Lichts bzw. Infrarotlichts handelt es sich bei den Emissionfeldern um hinterleuchtete ebene Flächenbereiche, die nach Art von Scheiben, Platten o.dgl. ausgebildet sind. Diese ebenen Flächen liegen zweckmäßigerweise in der Oberfläche des Halteelements, das die Lampen der Lichtquellen aufnimmt.

Ein entsprechend dieser Weiterbildung der Erfindung ausgebildetes Kamera Tracking System hat den Vorteil, daß die ebenen Emissionsflächen, bei denen es sich insbesondere um illuminierte Lichtflächen handelt, je nach dem Einfallswinkel der Erfassungskamera größer oder kleiner erscheinen, wobei die Lichtflächen in Extremsituationen, meistens bei einem ungünstigen Winkel zur Erfassungskamera, kleiner werden. Durch die gleichzeitige Verkleinerung der Lichtflächen und des optischen Abstandes tritt eine optische Überdeckung, wenn überhaupt, erst bei extrem starken Neigungen ein, so daß die Erfassungskameras auch bei extremen Winkeln zwischen Studiokamera und Erfassungskamera noch verwertbare Daten liefern.

In einer vorteilhaften Weiterbildung sind die Lichtflächen in einem bestimmten Winkel zueinander angeordnet. Beispielsweise sind einige Lichtflächen horizontal und andere vertikal angeordnet. Allgemein ausgedrückt sind die Lichtflächen auf zwei insbesondere rechtwinklig zueinander verlaufenden Seiten des Halteelements angeordnet. Dies hat den Vorteil, daß eine noch bessere optische Trennung erreicht wird und daß eine größere Anzahl von Lichtflächen an dem Halteelement (Ring, Rahmen etc.) angebracht werden können. Hierdurch stehen der Erfassungskamera auch bei extremen Schwenk-, Roll- oder Nickwinkeln der (Studio) Kamera dennoch genügend Lichtflächen zu einer exakten und schnellen Bestimmung der Position und der Orientierung der Kamera zur Verfügung.

In einer vorteilhaften Ausführungsform befinden sich hinter den Lichtflächen in einer Vertiefung oder Aussparung untergebrachte Lichtgeber (Lampen, LED, etc.). Dies hat den Vorteil, daß die Erfassungskamera nicht mehr die gesamten Lichtgeber wahrnimmt, sondern lediglich die durch die Öffnung der Vertiefung oder Aussparung heraustretenden Lichtstrahlen, die eine illuminierte Lichtfläche bilden.

In einer weiteren, bevorzugten Ausführungsform ist die Vertiefung oder Aussparung durch eine Abdeckung verschlossen. Diese schützt die eigentliche Lichtquelle vor Verschmutzung und/oder Beschädigung. Dabei ist es Vorteilhaft, die Abdeckung, zumindest jedoch ein in der Abdeckung vorgesehenes Fenster aus einem lichtdurchlässigen Glas, aus einem transparenten Kunststoff oder aus einem folienbeschichteten Glas zu bilden, damit das vom Lichtgeber ausgesandte Licht hindurchtreten kann. Die Abdeckung bildet dabei die Lichtfläche.

In einer besonders bevorzugten Ausführungsform läßt die Abdeckung bzw. das Fenster lediglich Licht mit einer Wellenlänge von mehr als 800 nm durch, so daß nur das Infrarotlicht durch die Abdeckung hindurchgelassen wird. Hierdurch erhöht sich für die ebenfalls nur infrarotes Licht aufnehmende Erfassungskamera der Kontrast des Lichtflecks gegenüber der Umgebung, insbesondere gegenüber dem im Studio vorhandenem Streulicht oder gegenüber Studioscheinwerfern.

Wenn eine Abdeckung oder ein Fenster eingesetzt wird, welches nur Licht einer einzigen Wellenlänge, beispielsweise Licht einer Wellenlänge von 850 nm, oder Licht eines eng begrenzten Wellenlängenbereiches, beispielsweise Licht mit einer Wellenlänge zwischen 830 nm und 870 nm durchläßt, wird der zuvor beschriebene Effekt noch verstärkt.

Das diffuse Abstrahlen des Lichtes von der Abdeckung bzw. vom Fenster hat den Vorteil, daß das von den 50 Leuchtdioden ausgestrahlte Licht von den Erfassungskameras als ein einheitlicher Lichtfleck wahrgenommen wird, das heißt, daß die 50 Lichtflecken bzw. -punkte der 50 Leuchtdioden quasi zu einem großen Lichtfleck bzw. zu einer "geschlossenen" Lichtfläche verschmelzen.

Eine weitere Erhöhung des Kontrastes wird dadurch erreicht, daß die Abdeckung oder. das Fenster das durchgelassene Licht diffus abstrahlt.

In einer bevorzugten Weiterbildung ist die Abdeckung im wesentlichen eben ausgeführt, was den Vorteil hat, daß die Lichtquelle als flächenhaftes Lichtfeld (ebene Lichtfläche) erschient.

In einer anderen, bevorzugten Weiterbildung ist die Abdeckung oder das Fenster kreisrund ausgebildet. Dies hat den Vorteil, daß die Erfassungskamera die Lichtquelle als runden, oder je nach Einfallswinkel der Erfassungskamera als elliptischen, Lichtfleck erkennt. Hierdurch werden bei bestimmten Einfallswinkeln auftretende Verzerrungen der geometrischen Form auf ein Minimum reduziert, so daß eine einfache und zuverlässige Schwerpunktsbestimmung möglich ist.

In einer alternativen Ausführungsform kann der in einer Aussparung des Rahmens angeordnete Lichtgeber mit zwei, vorzugsweise rechtwinklig zueinander angeordneten Abdeckungen versehen sein, so daß ein und derselbe Lichtgeber Lichtstrahlen sowohl nach oben als auch zur Seite hin ausstrahlen kann. Bei einer derartigen Anordnung identifiziert die Erfassungskamera jede der beiden Abdeckungen als ein separates Lichtfeld, so daß trotz Halbierung der Lichtgeber für die Erfassungskamera dieselbe Anzahl von Lichtfeldern zur Verfügung steht.

Hierdurch kann der Strombedarf und somit die Größe des benötigten Akkus reduziert werden, was eine deutliche Gewichtsersparnis zur Folge hat. Eine weitere Gewichtseinsparung und eine Kostenreduzierung wird durch die geringere Anzahl der Lichtquellen erreicht.

In einer weiteren, bevorzugten Ausführungsform ist die Lichtquelle aus vorzugsweise 50 Infrarot-Leuchtdioden gebildet, die im Inneren des Rahmens, in der Vertiefung oder Aussparung angeordnet sind. Die im Infrarotbereich arbeitenden Leuchtdioden benötigen sehr viel weniger Strom als herkömmliche Glühlampen und liefern darüber hinaus im Infrarotbereich eine größere Lichtmenge. Letzteres erhöht den Kontrast zum umgebenden Licht erheblich. Außerdem kann der Strombedarf, und somit auch der benötigte Akku verkleinert werden, so daß das Gesamtgewicht des Kamera Tracking Systems reduziert werden kann.

In einer anderen, bevorzugten Ausführungsform sind mehrere, vorzugsweise alle Lichtquellen einzeln schaltbar. Hierdurch ist es in einfacher Weise möglich das Kamera Tracking System zu initialisieren. Durch nachfolgendes Einschalten jeweils eines Lichtgebers können die Erfassungskameras den jeweiligen Lichtfleck definieren, so daß in der Folgezeit dem jeweils erkannten Lichtfleck die richtige Lage auf dem Rahmen zugeordnet werden kann. Zwar wäre es zur Initialisierung des Kamera Tracking Systems ausreichend, wenn mindestens einen Lichtfleck derart initialisiert wird, jedoch erhöht sich die Genauigkeit des Systems, wenn mehrere, oder vorzugsweise alle, Lichtflecken einzeln initialisiert werden.

In einer bevorzugten Weiterbildung werden die vom Gyroskop erhaltenen Meßwerte durch einen linearen Optimalfilter (Kaiman-Bucy-Filter) optimiert, insbesondere geglättet. Hierdurch ist eine präzisere Bestimmung der wirklichen Orientierung der Kamera möglich.

In einer anderen alternativen Ausführungsform ist das Lichtfeld als Reflektor ausgebildet. Das heißt am Rahmen sind analog zu den oben beschriebenen Abdeckungen vorzugsweise flächenhaft und eben ausgebildete Reflektoren (oder Spiegel) angebracht, die gegebenenfalls auch winklig zueinander angeordnet sein können. Das im Studio vorhandene sichtbare oder infrarote Licht wird an diesen Reflektoren reflektiert, so daß es von den Erfassungskameras wahrgenommen werden kann. Somit haben derartige Reflektoren für die Erfassungskameras dieselbe Funktion und dieselbe Wirkung wie eine Lichtfläche oder eine Lichtquelle.

Der Vorteil dieser Reflektoren (insbesondere Spiegel) besteht darin, daß hierdurch keinerlei Dioden oder andere Glühlampen und keinerlei Stromversorgung, also auch keine schweren Akkus, benötigt werden, was eine erhebliche Gewichts- und Kostenreduzierung bewirkt.

In einer anderen, bevorzugten Ausführungsform werden die Lichtgeber pulsierend betrieben, das heißt die Lichtgeber werden in regelmäßigen Abständen für einen nur sehr kurzen Zeitraum eingeschaltet. Dabei hat es sich als vorteilhaft erwiesen, analog hierzu die Erfassungskameras ebenfalls pulsierend und synchron zu betreiben, um Fehlmessungen zu verhindern. Mit Hilfe des angeschlossenen Computers können die Lichtgeber und die Erfassungskameras in einfacher Weise synchronisiert werden.

Durch die nur kurzzeitige Einschaltung der Lichtgeber, insbesondere der Leuchtdioden, können dies kurzzeitig mit einer höheren Spannung betrieben werden, so daß die Leuchtdioden etwa drei Mal so viel Licht abstrahlen, wie bei Nennspannung. Diese verbesserte Intensität der Lichtquelle bzw. des Lichtfeldes führt zu einem besseren Kontrast, so daß die Erfassungskameras die Lichtfelder und insbesondere deren Ränder sehr viel besser wahrnehmen kann.

Es hat sich als vorteilhaft herausgestellt, die Lichtquellen mit einer Frequenz von 50 Hertz und einer Leuchtdauer 1/5000 Sekunden zu betreiben. Alternativ hierzu sind auch andere Frequenzen von 1 0 bis zu 200 Hertz beziehungsweise Leuchtdauern von 1/50 Sek. bis zu 1/100.000 Sek. möglich. Insbesondere in Ländern, in denen die allgemeine Stromfrequenz 60 Hertz beträgt, wäre eine Taktung der Lichtquellen mit einer Frequenz von 60 Hertz vorteilhaft.

In einer bevorzugten Ausführungsform ist die Verschlußzeit der Erfassungskamera kürzer als das zwischen zwei Pulsen liegende Zeitintervall. Dies hat den Vorteil, daß innerhalb dieser kurzen Verschlußzeit weniger Fremdlicht auf den Photosensor der Erfassungskamera gelangt, was einen erhöhten Kontrast der Lichtfelder gegenüber der Umgebung zur Folge hat.

In einer bevorzugten Weiterbildung ist die Verschlußzeit der Erfassungskamera im wesentlichen gleich der Leuchtdauer der Leuchtdioden. Hierdurch wird erreicht, daß die Blende der Erfassungskamera gerade lange genug geöffnet ist, um das von den Leuchtdioden ausgestrahlte Licht aufzunehmen und daß die Blende nicht länger als nötig geöffnet ist, so daß möglichst wenig Fremdlicht aufgenommen wird. Dies führt zu einem noch besseren Kontrast zwischen den Lichtfeldern und der Umgebung.

Ein weiterer Vorteil besteht darin, daß die (Studio) Kamera durch das erfindungsgemäße Kamera Tracking System unabhängig von Schienen eingesetzt werden kann. Beispielsweise kann die Kamera auch auf der Schulter getragen werden oder für Außenaufnahmen (im Freien) eingesetzt werden.

Das erfindungsgemäße Kamera Tracking System ist, um in einem virtuellen Studio eingesetzt werden zu können, zuvor zu kalibrieren. Zu diesem Zweck kann man den von den Erfassungskameras erfaßten Hintergrund hinter der Studiokamera mit einem Raster versehen. Dies geschieht zweckmäßigerweise durch Auslegen eines "Teppichs" im Studio, der die Rasterung aufweist. Die Ausrichtung und Lage des "Teppichs" innerhalb des Studios sollte dabei bekannt sein.

Vorteilhaft ist es, das erfindungsgemäße Kamera Tracking System mit Hilfe einer elektromagnetische Strahlung emittierenden Kalibrierungsvorrichtung zu kalibrieren, bei der es sich wiederum vorzugsweise um eine Lichtquelle handelt. Diese Kalibrierungsvorrichtung wird durch das Studio bewegt und dabei von den Detektorvorrichtungen erfaßt. Auf diese Weise wird die geometrische Beziehung der Detektorvorrichtungen untereinander errechnet. In einem zweiten Schritt steht dann die Kalibrierungsvorrichtung fest und wird von sämtlichen Detektorvorrichtungen erfaßt. Hierdurch erfolgt der Abgleich des Studiokoordinatensystems auf die geometrische Beziehung der Detektorvorrichtungen. In einem letzten Schritt wird dann die Kalibrierungsvorrichtung von der Studiokamera erfaßt, um den Knotenpunkt (sogenannter nodal point) der Studiokamera relativ zu den mit der Studiokamera gekoppelten Emittervorrichtungen festzulegen. Aufgrund der zuvor ermittelten geometrischen Beziehung der Detektorvorrichtungen zur Kalibrierungsvorrichtung einerseits und der geometrischen Beziehung der Studiokamera zur Kalibrierungsvorrichtung ist es nun möglich, die geometrische Beziehung zwischen den mit der Studiokamera gekoppelten Emittervorrichtungen und dem Knotenpunkt der Kamera zu ermitteln. Damit ist das gesamte System kalibriert.

Weitere vorteilhafte Ausgestaltungen der Erfindung sind in den Unteransprüchen angegeben. Soweit im Vorstehenden und Nachfolgende auf diese Weiterbildungen nicht eingegangen wird, wird insoweit auf die entsprechenden Unteransprüche verwiesen.

Weitere Vorteile des erfindungsgemäßen Kamera Tracking Systems ergeben sich aus der beigefügten Zeichnung und den nachfolgend beschriebenen Ausführungsbeispielen, anhand derer die Erfindung mit als (Infrarot-)Lichtquellen und CCD-Erfassungskameras verdeutlicht wird. Die vorstehend genannten und noch weiter ausgeführten Merkmale können erfindungsgemäß jeweils einzeln oder in beliebigen Kombinationen miteinander verwendet werden. Die erwähnten Ausführungsbeispiele sind nicht als abschließende Aufzählung zu verstehen, sondern haben vielmehr exemplarischen Charakter. Es zeigen:
- Fig. 1: eine Ansicht eines virtuellen Studios mit einem erfindungsgemäßen Kamera Tracking System gemäß einem ersten Ausführungsbeispiel,
- Fig. 2: eine Studiokamera mit daran angebrachten, ringförmig angeordneten Lichtquellen gemäß dem ersten Ausführungsbeispiel,
- Fig. 3: ein Flußdiagramm zur Verdeutlichung der Verfahrensweise zur Verfolgung der Studiokamera,
- Fig. 4: eine perspektivische Seitenansicht einer Studiokamera mit daran angebrachtem ringförmigen Rahmen gemäß einem zweiten Ausführungsbeispiel,
- Fig. 5: der ringförmige Rahmen der Studiokamera gemäß Fig. 4,
- Fig. 6: eine Schnittansicht des Rahmens gemäß Fig. 5, geschnitten entlang Linie VI-VI, und
- Fig. 7: eine Schnittansicht des Rahmens gemäß Fig. 5, geschnitten entlang Linie VII-VII.

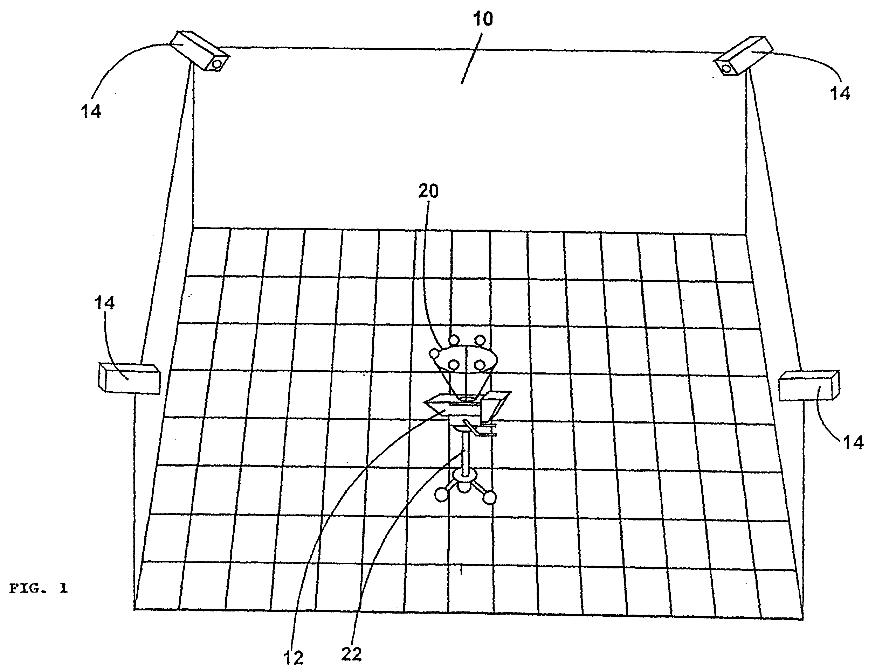

Fig. 1 zeigt ein Blauraumstudio 10 mit einer (Studio-) Kamera 12 und vier an der Decke aufgehängten Erfassungskameras 14. Die Erfassungskameras 14 sind möglichst hoch und möglichst weit vom Mittelpunkt des Blauraumstudios entfernt aufgehängt und derart im Blauraumstudio verteilt, daß sie das Studio aus verschiedenen Blickwinkeln heraus erfassen.

Bei der hier benutzten Erfassungskamera 14 handelt es sich um eine handelsübliche CCD-TV Kamera für schwarz-weiß Aufnahmen, die zur Aufnahme von infrarotem Licht umgebaut wurde. Das heißt der in handelsüblichen CCD-TV Kameras befindliche, das Infrarotlicht ausfilternde Filter wurde entfernt und durch einen das sichtbare Licht ausfilternden und nur das Infrarotlicht durchlassenden Filter ersetzt. Durch diese Umbaumaßnahme ist eine kostengünstige Erfassungskamera entstanden, die im Infrarotbereich ausgesendetes Licht besonders gut erkennt kann. Die vom CCD Chip erkannten Lichtpunkte werden dann an einem hier nicht dargestellten Rechner zur Auswertung weitergeleitet.

An der (Studio) Kamera 12 ist im Abstand von etwa 50 cm nach oben ein Ring 16 montiert, an dem über Distanzelemente 18 fünf Lichtquellen 20 gehalten sind. Die Lichtquellen 20 sind fest mit der Kamera 12 verbunden und machen folglich alle Bewegungen der Kamera 12 ebenso mit. Die Kamera 12 ist auf einem höhenverstellbaren Dreibein (Stativ) 22 montiert, dessen Beine Rollen aufweisen, so daß die gesamte Kamera 12 beliebig durch das Blauraumstudio 10 bewegt werden kann.

Der Ring 16 ist in sechs gleich große Abschnitte unterteilt, so daß auf dem Ring 16 sechs äquidistante Fixpunkte entstehen. Jede der fünf Lichtquellen 20 ist auf einem dieser sechs Fixpunkte angebracht, so daß zwangsläufig ein Fixpunkt 24 unbesetzt bleibt. Hierdurch ist es für die Erfassungskameras 14 zweifelsfrei möglich, die Orientierung der Kamera 12 zu bestimmen, da die Anordnung der Lichtquellen 20 aufgrund des unbesetzten Fixpunktes 24 unsymmetrisch ist.

Die Lichtquelle 20 wird von einer handelsüblichen 1 2 Volt Halogen-Glühlampe gebildet, die von einem kugelförmigen Gehäuse aus Teflon umgeben ist. Die Halogen-Glühlampen werden mit einer Gleichspannung von 4,5 Volt betrieben, so daß diese dementsprechend nur schwach glimmen. Die hierdurch erzielte, schwache Lichtimmission findet überwiegend im Infrarotbereich statt und kann von daher sehr gut von den ebenfalls im Infrarotbereich arbeitenden Erfassungskameras 14 wahrgenommen werden. Die aus Teflon gebildeten Gehäuse sind so dünnwandig ausgebildet, daß man durch sie zwar nicht hindurchsehen kann, daß sie aber dennoch lichtdurchlässig sind. Hierdurch wird eine vergleichsweise große Lichtquelle 20 erzielt, deren Oberfläche annähernd gleichmäßig ausgeleuchtet ist, so daß die Erfassungskamera 1 4 einen deutlichen und gegenüber dem Hintergrund scharf umrissenen Lichtpunkt wahrnehmen kann.

Die (Studio) Kameras 12 arbeiten in Deutschland üblicherweise mit einer Bildfrequenz von 50 Hertz und in Amerika mit einer Bildfrequenz von 60 Hertz. Damit der die von der Erfassungskamera 14 gelieferten Bilder auswertende Rechner die momentane Position der Kamera 12 in korrekter Weise dem virtuell erzeugten Bildhintergrund zuordnen kann, sollte die Erfassungskamera 14 mit der (Studio-) Kamera 12 synchronisiert sein, damit zu jedem von der Kamera 12 aufgenommenen Bild die exakte Momentanposition bestimmt werden kann. Folglich arbeitet die Erfassungskamera 14 ebenfalls mit 50 bzw. 60 Hertz.

Die Arbeitsweise des erfindungsgemäßen Kamera Tracking Systems vorzugsweise im Infrarotbereich hat den Vorteil, daß hierdurch Streulicht und andere Lichtquellen, die zur Ausleuchtung der Akteure bzw. der Bühne erforderlich sind, von der Erfassungskamera 14 nicht oder nur schlecht erkannt werden. Das von den Lichtquellen 20 imitierte Infrarotlicht wird von der Erfassungskamera 14 jedoch sehr gut erkannt, während das Licht im sichtbaren Bereich ausgefiltert wird. Durch eine derartige Trennung der verschiedenen Lichtspektren kann das Kamera Tracking System die Position und Lage der Kamera 1 2 zuverlässig feststellen.

Die Auswertung der von den Erfassungskameras 14 aufgenommenen Bilder erfolgt nach folgendem Verfahren:

Vorteilhafterweise werden die Erfassungskameras 14 fest an der Studiodecke montiert, wobei die Position und die Ausrichtung einer jeden Erfassungskamera durch Kalibrieren genau festgelegt wird. Während des Betriebs des erfindungsgemäßen Kamera Tracking Systems werden von den Erfassungskameras 14 exakt zeitgleich, d.h. mit gleicher Frequenz und synchronisiert, zu der (Studio) Kamera 12 vier Aufnahmen der Lichtquellen 20 gemacht und an einen Rechner weitergeleitet. Dabei bilden die vergleichsweise großen Lichtquellen 20 einen entsprechend großen Lichtfleck auf dem CCD-Chip der Erfassungskamera 1 4. Die einzelnen FestkörperMatrixen der CCD-Chips liefern dann ein entsprechendes Signal an den Rechner, wenn diese Festkörper-Matrix über einen gewissen Grenzwert hinaus Infrarotlicht empfängt.

Der Rechner wertet die empfangenen Lichtsignale derart aus, daß er nur die Signale als eine echte Lichtquelle wahrnimmt, bei der eine entsprechende Vielzahl von benachbarten Festkörper-Matrixen ein Signal sendet (binarisieren). Anschließend wird über eine allgemein übliche Schwerpunktbestimmung auch der Schwerpunkt einer jeden Lichtquellen im Bild durchgeführt. Hierzu ist eine relativ große Ausgestaltung der einzelnen Lichtquellen 20 vorteilhaft, da hierdurch relativ scharf umrissene und gleichzeitig relativ große Lichtpunkte aufgenommen werden. Auch ist hierdurch die Verwechslungsgefahr mit anderen Lichtquellen minimiert, da derartig große infrarot imitierende Lichtquellen im Blauraumstudio 10 selten vorkommen.

Nachdem auf jedem einzelnen Bild einer jeden Erfassungskamera 14 die einzelnen Lichtquellen mittels ihrer Schwerpunkte definiert sind, wird eine durch den Schwerpunkt der Lichtquelle auf dem CCD-Chip und einem definierten Punkt innerhalb der Erfassungskamera 14 hindurchlaufende Gerade bestimmt. Somit hat der Rechner für jede Lichtquelle 20 vier Geraden im Raum zur Verfügung, die sich in einem bestimmten Punkt schneiden. Dieser Schnittpunkt ist der tatsächliche Ort der Lichtquelle 20 im Blauraumstudio 10. Da die verschiedenen Erfassungskameras 14 das Blauraumstudio 10 von allen Seiten, also dreidimensional erfassen, kann hiermit die Position einer jeden Lichtquelle 20 im Raum bestimmt werden.

Nachdem alle fünf Lichtquellen 20 im Raum bestimmt sind, läßt sich die Position und die Orientierung (Lage) der (Studio-) Kamera 12 bestimmen, da diese in einem bekannten Verhältnis zu den Lichtquellen 20 steht.

Bei einem derartigen Messen und Auswerten der Lichtpunkte können naturgemäß Meßund/oder Rechenungenauigkeiten auftreten, so daß es in der Praxis vorkommt, daß sich die vier vom Rechner bestimmten Geraden nicht wirklich in einem Punkt treffen. Deshalb führt der Rechner noch allgemein bekannte, analytische Fehlerabschätzungen durch, um aus den festgelegten vier Geraden einen möglichst genau der tatsächlichen Lage der Lichtquelle entsprechenden Punkt im Raum zu definieren.

In einer nicht dargestellten Ausführungsform weist das erfindungsgemäße Kamera Tracking System zehn oder mehr Erfassungskameras auf. Dies hat unter anderem den Vorteil, daß hierdurch zehn Geraden im Raum bestimmt werden, die sich theoretisch in einem Punkt treffen sollten. Durch diese zusätzlichen, redundanten Geraden läßt sich die Genauigkeit der rechnerisch bestimmten Lichtquelle im Vergleich zur tatsächlichen Lichtquelle weiter erhöhen, da durch das zusätzliche Datenmaterial auftretende Meß- und/oder Rechenfehler besser herausgerechnet werden können. Ein weiterer Vorteil besteht darin, daß durch die redundanten Erfassungskameras eine zuverlässigere Erfassung der einzelnen Lichtpunkte erfolgen kann, das heißt, daß ein unbeabsichtigtes Abdecken einzelner Lichtpunkte keine großen Folgen auf die Auswertung hat.

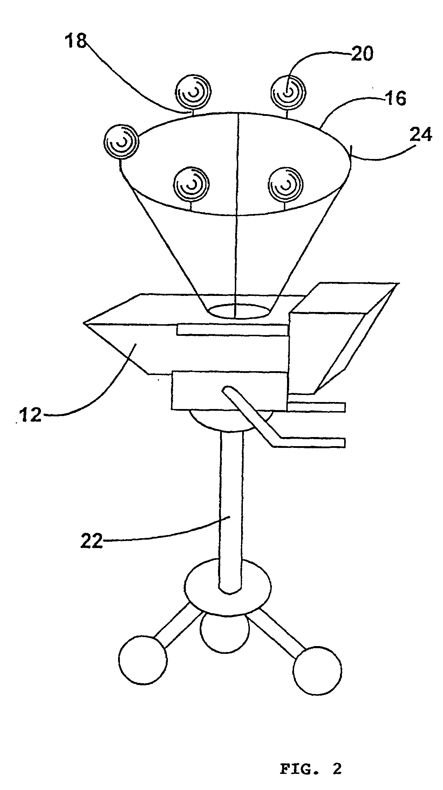

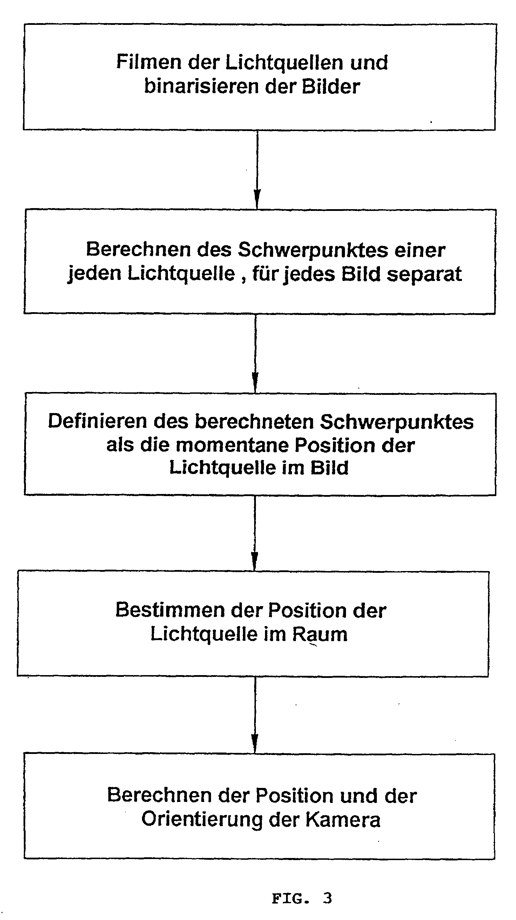

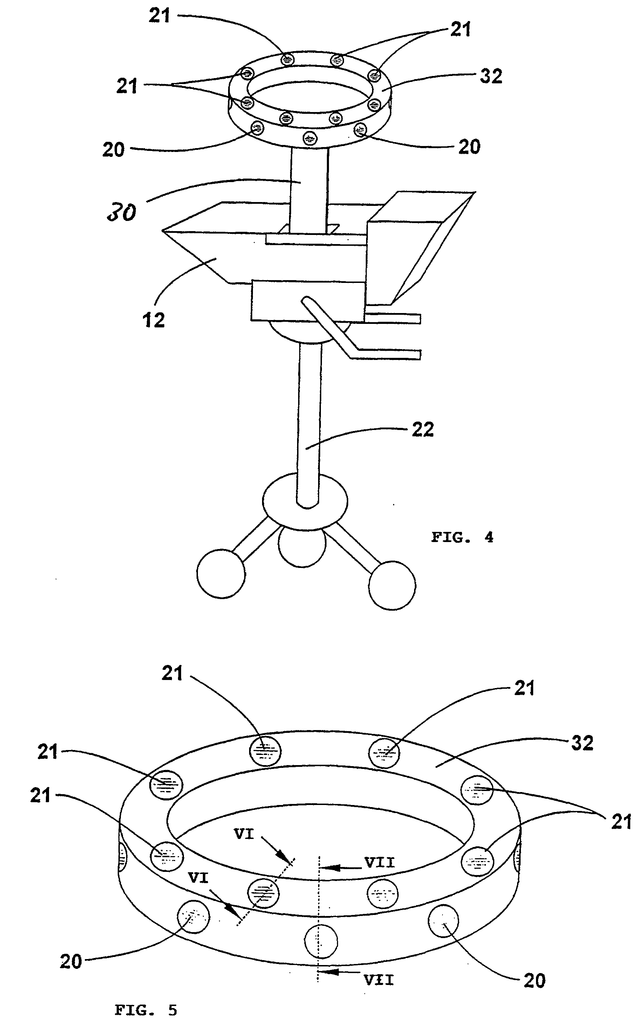

In den Fign. 4 bis 7 sind die auf einem Ring (Rahmen) angeordneten Lichtquellen eines alternativen Kamera Tracking Systems dargestellt. Soweit die Bestandteile dieses alternativen Systems denen des Kamera Tracking Systems gemäß Fign. 1 bis 3 entsprechen oder gleichen, sind sie mit den gleichen Bezugszeichen versehen. Fig. 4 zeigt eine auf einem Dreibein 22 positionierte (Studio) Kamera 12, auf der über ein Halteelement 30 ein ringförmiger Rahmen 32 angebracht ist. Dieser im Querschnitt viereckige, ansonsten ringförmig ausgebildete Rahmen 32 verfügt über einige auf seinem Umfang verteilte, vertikal angeordnete Lichtfelder bzw. -flächen 20 und über einige von den Lichtfeldern 20 unabhängige, auf der Stirnseite des Rahmens 32 verteilte, horizontal angeordnete Lichtfelder bzw.― flächen 21. In der hier dargestellten Ausführungsform sind die stirnseitig angebrachten Lichtfelder 21 gegenüber den umfangsseitig angebrachten Lichtfeldern 20 jeweils versetzt angeordnet, wobei der Abstand zwischen den Lichtfeldern 20, 21 etwa dem Durchmesser der Lichtfelder 20, 21 entspricht.

In einer anderen, hier nicht dargestellten Ausführungsform, sind die stirnseitig angebrachten Lichtfelder 21 und die umfangsseitig angebrachten Lichtfelder 20 miteinander fluchtend angebracht, so daß beide vom selben Lichtgeber aus gespeist werden können.

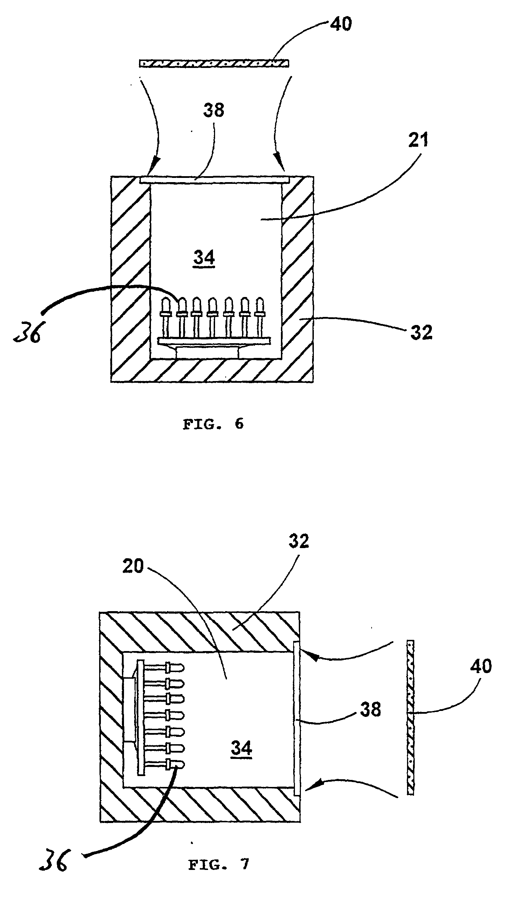

Wie insbesondere den Fign. 6 und 7 zu entnehmen ist, verfügt der Rahmen 32 über eine Anzahl von Aussparungen 34, in denen der jeweilige Lichtgeber untergebracht ist, wobei sich der Lichtgeber aus einer Anzahl von zirka 50 Infrarot-Leuchtdioden 36 zusammensetzt, die am Boden der Aussparung 34 angeordnet sind. Dabei sind die Leuchtdioden 36 so ausgerichtet, daß ihre Hauptstrahlrichtung zur Öffnung 38 der Aussparung 34 zeigt. Diese Qffnung 38 wird durch eine kreisrunde Abdeckung 40 aus einem folienbeschichtetem Glas verschlossen, so daß die Leuchtdioden 36 gegen Beschädigung und Verschmutzung geschützt sind. Die Leuchtdioden 36 strahlen infrarotes Licht mit einer Wellenlänge von 850 nm aus.

Die aus folienbeschichtetem Glas gebildete Abdeckung 40 läßt nur Licht mit einer Längenwelle von mehr als 800 nm durch, wobei das Licht diffus abgestrahlt wird, so daß das punktförmig von den Leuchtdioden 36 abgestrahlte Licht von den Erfassungskameras als ein einheitlicher Lichtfleck wahrgenommen wird. Hierdurch ist gewährleistet, daß lediglich das für das menschliche Auge unsichtbare Infrarotlicht heraustreten kann, weiches dann von den hier nicht dargestellten Erfassungskameras erkannt wird.

Die Leuchtdioden werden pulsierend mit einer Frequenz von 50 Hz betrieben, wobei die Blende der Verschlußkamera hierzu synchron betrieben wird. Gesteuert werden beide über die angeschlossenen Rechner. Es hat sich herausgestellt, daß der Kontrast am größten ist, wenn die Verschlußzeit der Blende gleich der Leuchtdauer der Leuchtdioden ist, wobei es vorteilhaft ist, die Blende erst zu öfinen, nachdem die Leuchtdioden mit ganzer Leistung leuchten. Bei dem Einsatz von 50 Leuchtdioden hat sich eine Leuchtdauer und somit Verschlußzeit von 1/5000 Sekunde als ausreichend herausgestellt.

In einer alternativen, hier nicht dargestellten, Ausführungsform weist eine Aussparung zwei Öffnungen auf, wobei eine über die Stirnseite des Rahmens nach oben zeigt, während die andere über die Umfangsseite des Rahmens zur Seite zeigt. Beide Öffnungen sind hier ebenso mit einer Abdeckung verschlossen, die nur infrarotes Licht durchläßt. In dieser Ausführungsform sind die Leuchtdioden derart angeordnet, daß das von ihnen ausgestrahlte infrarote Licht durch beide Öffnungen aus dem Rahmen heraustreten kann. Somit können zwei für die Erfassungskamera verschieden erscheinende Lichtfelder durch denselben Lichtgeber erzeugt werden, was zu erheblichen Einsparungen in der Energieversorgung und zu erheblichen Gewichts- und Kostenreduzierungen führt.

In noch einer anderen, hier nicht dargestellten, alternativen Ausführungsform sind auf dem Rahmen statt der infrarotlichtdurchlässigen Abdeckungen Reflektoren (auch Spiegel) angeordnet. Hierdurch wird das im Studio vorhandene sichtbare oder infrarote Licht reflektiert, so daß die Reflektoren für die an der Decke angebrachten Erfassungskameras als helle Lichtflecken erkennbar sind. Somit können die Erfassungskameras diese Reflektoren genauso als Lichtfelder (Lichtquellen) erkennen und die Position und die Orientierung der (Studio) Kamera bestimmen.

Um mit Hilfe des erfindungsgemäßen Kamera Tracking Systems gemäß den zuvor beschriebenen Ausführungsbeispielen die Position und Lage bzw. Ausrichtung einer Studiokamera ermitteln zu können, wird wie folgt verfahren, nachdem das System kalibriert worden ist (siehe dazu die in dem Abschnitt vor dem Beginn der Beschreibung der Ausführungsbeispiele dargelegte Verfahrensweise bzw. Anspruch 11). Zunächst werden die mit der Studiokamera 12 direkt oder, über deren Stativ 22 indirekt, angebrachten Lichtquellen 20 durch die Erfassungskameras 14 aufgenommen. Die so entstehenden Bilder werden binarisiert, um anschließend für jedes Bild den Schwerpunkt einer jeden Lichtquelle 20 separat zu berechnen. Im Anschluß daran werden die berechneten Schwerpunkte als die momentane Position der jeweiligen Lichtquelle im jeweiligen Bild definiert. Unter Einbeziehung der definierten Positionen in den Bildern der involvierten Erfassungskameras 14 wird dann die Position jeder einzelnen Lichtquelle 20 im Raum bestimmt. Anhand dieser Bestimmung wiederum erfolgt die Berechnung der momentanen Position und/oder der momentanen Lage bzw. Ausrichtung der Studiokamera 12 anhand der räumlichen Position der einzelnen Lichtquellen 20. Ist die momentane Position und Ausrichtung bzw. Lage der Studiokamera 12 errechnet, kann mit dem Grafikrechner, der den virtuellen Hintergrund im Blaustudio 10 erzeugt, die der Kameraposition und -lage entsprechende Hintergrunddarstellung generiert und diese auf den Hintergrund projiziert werden.

## Patentansprüche

1. Kamera Tracking System für ein virtuelles Femseh- oder Videostudio zur Bestimmung der Position und Ausrichtung einer Aufnahmekamera mit
- mindestens drei Emittervorrichtungen zur Abgabe von elektromagnetischer Strahlung, wobei die Emittervorrichtungen mechanisch mit der Aufnahmekamera koppelbar sind,
- mindestens zwei Detektorvorrichtungen zur Erfassung der Lage der Emittervorrichtungen anhand der von den Emittervorrichtungen abgegebenen elektromagnetischen Strahlung, wobei mit jeder Detektorvorrichtung mehrere Emittervorrichtungen erfaßbar sind, und
- einer Recheneinheit zur Auswertung der von den Detektorvorrichtungen erfaßten und von den Emittervorrichtungen abgegebenen elektromagnetischen Strahlung und zur Ermittlung der Position und Ausrichtung der mindestens drei Emittervorrichtungen relativ zu den mindestens zwei Detektorvorrichtungen und
- einem mit den Emittervorrichtungen koppelbaren und Meßwerte liefernden Gyroskop, das mit der Recheneinheit verbunden ist, wobei die Recheneinheit die Meßwerte des Gyroskop zur Korrektur der mit Hilfe der Detektorvorrichtungen ermittelten Ausrichtung der Emittervorrichtungen verarbeitet

2. Kamera Tracking System nach Anspruch 1, **dadurch gekennzeichnet, daß** die Emittervorrichtungen aktiv arbeitende Sendevorrichtungen zum Aussenden der elektromagnetischen Strahlung in Richtung auf die Detektorvorrichtungen oder passiv arbeitende Reflektionsvorrichtungen zum Reflektieren von elektromagnetischer Strahlung in Richtung auf die Detektorvorrichtungen sind.

3. Kamera Tracking System nach Anspruch 1 oder 2, **dadurch gekennzeichnet, daß** die Emittervorrichtungen an einem mit der Aufnahmekamera koppelbaren Halteelement angeordnet sind.

4. Kamera Tracking System nach Anspruch 3, **dadurch gekennzeichnet, daß** die Emittervorrichtungen derart an dem Halteelement angeordnet sind, daß sie die elektromagnetische Strahlung von einer gemeinsamen Seitenfläche oder von zwei winklig, insbesondere im wesentlichen rechtwinklig zueinander verlaufenden Seitenflächen abstrahlen.

5. Kamera Tracking System nach Anspruch 3 oder 4, **dadurch gekennzeichnet, daß** das Halteelement ein Ring ist, der eine obere Stirnfläche und eine seitliche umlaufende Umfangsfläche aufweist, die an die Stirnfläche angrenzt.

6. Kamera Tracking System nach Anspruch 5, **dadurch gekennzeichnet, daß** die Emittervorrichtungen an der Stirnfläche des Rings angeordnet sind.

7. Kamera Tracking System nach Anspruch 5 oder 6, **dadurch gekennzeichnet, daß** die Emittervorrichtungen auch an der Umfangsfläche angeordnet sind.

8. Kamera Tracking System nach einem der Ansprüche 1 bis 7, **dadurch gekennzeichnet, daß** die Emittervorrichtungen jeweils eine sphärische Emitterfläche aufweisen, aus der die elektromagnetische Strahlung austritt und/oder von der sie reflektiert wird.

9. Kamera Tracking System nach Anspruch 8, **dadurch gekennzeichnet, daß** die Emittervorrichtungen jeweils eine ebene Emitterfläche aufweisen, aus der die elektromagnetische Strahlung austritt und/oder von der sie reflektiert wird.

10. Kamera Tracking System nach Anspruch 9 und 4, **dadurch gekennzeichnet, daß** die Emitterflächen in einer gemeinsamen Seitenfläche oder in den beiden winklig zueinander verlaufenden Seitenflächen des Halteelements liegen.

11. Kamera Tracking System nach einem der Ansprüche 1 bis 10, **dadurch gekennzeichnet,**
- **daß** eine elektromagnetische Strahlung aussendende, insbesondere als vorzugsweise im Infrarotbereich sendende Lichtquelle ausgebildete Kalibrierungsvorrichtung vorgesehen ist, die von den Detektorvorrichtungen und der Studiokamera erfaßbar ist, und
- **daß** die Recheneinheit
- anhand der von den Detektorvorrichtungen bei Bewegung der Kalibrierungsvorrichtung gelieferten Signale die geometrische Beziehung der Detektorvorrichtungen relativ zueinander und anhand der von den Detektorvorrichtungen bei stillstehener Kalibrierungsvorrichtung gelieferten Signale die geometrische Beziehung der Detektorvorrichtungen relativ zum Studio ermittelt und
- anhand der von der Studiokamera bei Erfassung der Kalibrierungsvorrichtung gelieferten Signale die Relativlage des Knotenpunkts (nodal point) der Studiokamera zur Anordnung der mit der Studiokamera gekoppelten Emittervorrichtungen ermittelt.

12. Kamera Tracking System nach einem der Ansprüche 1 bis 11, **dadurch gekennzeichnet, daß** die Emittervorrichtungen insbesondere im Infrarotlichtbereich abstrahlende Lichtquellen aufweisen und daß die Detektorvorrichtungen als Erfassungskameras für das Licht dieser Lichtquellen ausgebildet sind.

13. Kamera Tracking System nach Anspruch 12, **dadurch gekennzeichnet, daß** die Lichtquellen der Emittervorrichtungen in Vertiefungen des Halteelements angeordnet sind und daß die Vertiefungen jeweils durch eine Abdeckung abgedeckt sind, die die Emitterflächen bilden.

14. Kamera Tracking System nach Anspruch 13, **dadurch gekennzeichnet, daß** die Abdeckungen das Licht der Lichtquellen diffus abstrahlen.

15. Kamera Tracking System nach einem der Ansprüche 12 bis 14, **dadurch gekennzeichnet, daß** die Lichtquellen Leuchtdioden sind, wobei jeder Emittervorrichtung eine Vielzahl von Leuchtdioden zugeordnet sind, die einzeln, gruppenweise oder gemeinsam schaltbar sind.

16. Kamera Tracking System nach Anspruch 2 und 8 oder 9, **dadurch gekennzeichnet, daß** die Emitterflächen der Emittervorrichtungen als Reflektoren für elektromagnetische Strahlung ausgebildet sind.

17. Kamera Tracking System nach einem der Ansprüche 1 bis 16, **dadurch gekennzeichnet, daß** die Emittervorrichtungen ungleichmäßig verteilt angeordnet sind.

## Claims

1. A camera tracking system for a virtual television or video studio for determining the position and orientation of a recording camera, comprising:
- at least three emitter devices for emitting electromagnetic radiation, the emitter devices being adapted to be mechanically coupled with the recording camera,
- at least two detector devices for detecting the position of the emitter devices based upon the electromagnetic radiation emitted by the emitter devices, each detector device being adapted to detect plurality of emitter devices,
- a computer unit for evaluating the electromagnetic radiation detected by the detector devices and emitted by the emitter devices and for determining the position and the orientation of the at least three emitter devices relative to the at least two detector devices, and
- a gyroscope adapted to be coupled to the emitter devices and supplying measured values, the gyroscope being connected to the computer unit, the computer unit processing the measured values from the gyroscope to correct the orientation of the emitter devices as determined on the basis of the detecting devices.

2. The camera tracking system of claim 1, **characterized in that** the emitter devices are active transmitter devices for emitting the electromagnetic radiation towards the detecting devices or passive reflector devices for reflecting electromagnetic radiation towards the detector devices.

3. The camera tracking system of claim 1 or 2, **characterized in that** the emitter devices are arranged on a support member adapted to be coupled with the recording camera.

4. The camera tracking system of claim 3, **characterized in that** the emitter devices are arranged on the support member such that they radiate the electromagnetic radiation from a common side surface or from two side surfaces disposed angularly relative to each other, in particular substantially at right angles.

5. The camera tracking system of claim 3 or 4, **characterized in that** the support member is a ring with an upper front face and a laterally extending circumferential face adjoining the front face.

6. The camera tracking system of claim 5, **characterized in that** the emitter devices are disposed on the front face of the ring.

7. The camera tracking system of claim 5 or 6, **characterized in that** the emitter devices are also disposed on the circumferential surface.

8. The camera tracking system of one of claims 1 to 7, **characterized in that** the emitter devices each have a spherical emitter surface from which the electromagnetic radiation is radiated and/or from which it is reflected.

9. The camera tracking system of claim 8, **characterized in that** the emitter devices each have a planar emitter surface from which the electromagnetic radiation is radiated and/or from which it is reflected.

10. The camera tracking system of claims 9 and 4, **characterized in that** the emitter surfaces lie in a common side surface or in the two angled side surfaces of the support member.

11. The camera tracking system of one of claims 1 to 10, **characterized in**
- **that** a calibration device is provided that emits electromagnetic radiation and is designed, in particular, as a light source preferably emitting in the infrared range, the calibration device being detectable by the detector devices and the studio camera, and
- **that** the computer unit
- determines the geometric relationship of the detecting devices relative to each other from the signals supplied by the detector devices upon movement of the calibration device and determines the geometric relationship of the detector devices relative to the studio from the signals supplied by the detector devices with the calibration device standing still, and
- determines the relative position of the nodal point of the studio camera to the arrangement of the emitter devices coupled to the studio camera, from the signals supplied by the studio camera upon detecting the calibration device.

12. The calibration tracking system of one of claims 1 to 11, **characterized in that** the emitter devices comprise light sources particularly emitting light in the infrared range, and that the detecting devices are designed as detecting cameras for the light from these light sources.

13. The camera tracking system of claim 12, **characterized in that** the light sources of the emitter devices are located in recesses of the support member, and that the recesses are each covered by a cover that forms the emitter surface.

14. The camera tracking system of claim 13., **characterized in that** the covers diffusely radiate the light from the light sources.

15. The camera tracking system of one of claims 12 to 14, **characterized in that** the light sources are light emitting diodes, each emitter device being associated with a plurality of light emitting diodes that may be switched individually, in groups or commonly.

16. The camera tracking system of claim 2 and 8 or 9, **characterized in that** the emitter surfaces of the emitter devices are designed as reflectors for electromagnetic radiation.

17. The camera tracking system of one of claims 1 to 16, **characterized in that** the emitter devices are distributed irregularly.

## Revendications

1. Système de poursuite de caméra pour un studio de télévision ou de vidéo virtuel pour déterminer la position et l'orientation d'une caméra avec
- au moins trois dispositifs émetteurs pour l'émission de rayonnement électromagnétique, les dispositifs émetteurs pouvant être couplés mécaniquement avec la caméra,
- au moins deux dispositifs détecteurs pour la détection de la position des dispositifs émetteurs à l'aide du rayonnement électromagnétique émis par les dispositifs émetteurs, plusieurs dispositifs émetteurs pouvant être détectés avec chaque dispositif détecteur, et
- une unité de calcul pour l'analyse du rayonnement électromagnétique capté par les dispositifs détecteurs et émis par les dispositifs émetteurs et pour le calcul de la position et de l'orientation des au moins trois dispositifs émetteurs par rapport aux au moins deux dispositifs détecteurs et
- un gyroscope pouvant être couplé avec les dispositifs émetteurs et fournissant des valeurs de mesure, qui est relié à l'unité de calcul, l'unité de calcul traitant les valeurs mesurées du gyroscope pour la correction de l'orientation des dispositifs émetteurs calculée à l'aide des dispositifs détecteurs.

2. Système de poursuite de caméra selon la revendication 1, **caractérisé en ce que** les dispositifs émetteurs sont des dispositifs d'émission travaillant de façon active pour l'émission du rayonnement électromagnétique en direction des dispositifs détecteurs ou des dispositifs de réflexion travaillant de façon passive pour la réflexion de rayonnement électromagnétique en direction des dispositifs détecteurs.

3. Système de poursuite de caméra selon la revendication 1 ou 2, **caractérisé en ce que** les dispositifs émetteurs sont disposés sur un élément de maintien pouvant être couplé avec la caméra.

4. Système de poursuite de caméra selon la revendication 3, **caractérisé en ce que** les dispositifs émetteurs sont disposés sur l'élément de maintien de telle sorte qu'ils diffusent le rayonnement électromagnétique d'une surface latérale commune ou de deux surfaces latérales agencées l'une par rapport à l'autre en formant un angle, en particulier essentiellement un angle droit.

5. Système de poursuite de caméra selon la revendication 3 ou 4, **caractérisé en ce que** l'élément de maintien est une bague, qui présente une face frontale supérieure et une face périphérique latérale qui est contiguë à la face frontale.

6. Système de poursuite de caméra selon la revendication 5, **caractérisé en ce que** les dispositifs émetteurs sont disposés sur la face frontale de la bague.

7. Système de poursuite de caméra selon la revendication 5 ou 6, **caractérisé en ce que** les dispositifs émetteurs sont disposés également sur la surface périphérique.

8. Système de poursuite de caméra selon l'une quelconque des revendications 1 à 7, **caractérisé en ce que** les dispositifs émetteurs présentent chacun une surface émettrice sphérique, de laquelle sort le rayonnement électromagnétique et/ou par laquelle il est réfléchi.

9. Système de poursuite de caméra selon la revendication 8, **caractérisé en ce que** les dispositifs émetteurs présentent respectivement une surface émettrice plane, de laquelle sort le rayonnement électromagnétique et/ou par laquelle il est réfléchi.

10. Système de poursuite de caméra selon les revendications 9 et 4, **caractérisé en ce que** les surfaces émettrices sont disposées sur une face latérale commune ou sur les deux faces latérales de l'élément de maintien qui forment un angle l'une par rapport à l'autre.

11. Système de poursuite de caméra selon l'une quelconque des revendications 1 à 10, **caractérisé**
- **en ce qu'**il est prévu des dispositifs d'étalonnage émettant un rayonnement électromagnétique, en particulier conçu comme une source lumineuse émettant de préférence dans la plage infrarouge, qui peut être détecté par les dispositifs détecteurs et la caméra de studio et,
- **en ce que** l'unité de calcul
- calcule le rapport géométrique des dispositifs détecteurs les uns par rapport aux autres à l'aide des signaux fournis par les dispositifs détecteurs lors du déplacement du dispositif d'étalonnage et le rapport géométrique des dispositifs détecteurs par rapport au studio à l'aide des signaux fournis par les dispositifs détecteurs avec le dispositif d'étalonnage à l'arrêt et
- calcule la position relative du point nodal (nodal point) de la caméra de studio par rapport à l'agencement des dispositifs émetteurs couplés avec la caméra de studio à l'aide des signaux fournis par la caméra de studio lors de la détection du dispositif d'étalonnage.

12. Système de poursuite de caméra selon l'une quelconque des revendications 1 à 11, **caractérisé en ce que** les dispositifs émetteurs présentent des sources lumineuses qui émettent en particulier dans la plage de la lumière infrarouge et **en ce que** les dispositifs détecteurs sont conçus comme des caméras de détection pour la lumière de ces sources lumineuses.

13. Système de poursuite de caméra selon la revendication 12, **caractérisé en ce que** les sources lumineuses des dispositifs émetteurs sont disposées dans des cavités de l'élément de maintien et **en ce que** les cavités sont recouvertes respectivement par un revêtement que forment les surfaces d'émission.

14. Système de poursuite de caméra selon la revendication 13, **caractérisé en ce que** les revêtements réfléchissent de façon diffuse la lumière des sources lumineuses.

15. Système de poursuite de caméra selon l'une quelconque des revendications 12 à 14, **caractérisé en ce que** les sources lumineuses sont des diodes électroluminescentes, un grand nombre de diodes électroluminescentes étant attribué à chaque dispositif émetteur, lesquelles diodes peuvent être commandées individuellement, par groupe ou ensemble.

16. Système de poursuite de caméra selon les revendications 2 et 8 ou 9, **caractérisé en ce que** les surfaces émettrices des dispositifs émetteurs sont conçues comme des réflecteurs pour un rayonnement électromagnétique.

17. Système de poursuite de caméra selon l'une quelconque des revendications 1 à 16, **caractérisé en ce que** les dispositifs émetteurs sont disposés avec une répartition inégale.
